(19) Europäisches Patentamt
European Patent Office
Office européen des brevets

(11) **EP 4 497 052 B1**

(12) **EUROPEAN PATENT SPECIFICATION**

(45) Date of publication and mention
of the grant of the patent:
**18.02.2026 Bulletin 2026/08**

(21) Application number: **23710347.8**

(22) Date of filing: **10.03.2023**

(51) International Patent Classification (IPC):
$G05D\ 7/06^{(2006.01)}$

(52) Cooperative Patent Classification (CPC):
**G05D 7/0635**

(86) International application number:
**PCT/EP2023/056145**

(87) International publication number:
**WO 2023/180095 (28.09.2023 Gazette 2023/39)**

(54) **METHOD AND DEVICES FOR CONTROLLING A FLOW CONTROL SYSTEM**

VERFAHREN UND VORRICHTUNGEN ZUR STEUERUNG EINES DURCHFLUSSREGELSYSTEMS

PROCÉDÉ ET DISPOSITIFS DE COMMANDE D'UN SYSTÈME DE COMMANDE D'ÉCOULEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.03.2022 CH 3042022**

(43) Date of publication of application:
**29.01.2025 Bulletin 2025/05**

(73) Proprietor: **Belimo Holding AG
8340 Hinwil (CH)**

(72) Inventors:
• **FUX, Samuel
8610 Uster (CH)**
• **SCHOLZ, Volkher
8044 Zürich (CH)**
• **KELLER, Jürg
4612 Wangen bei Olten (CH)**

(74) Representative: **Rentsch Partner AG
Kirchenweg 8
Postfach
8034 Zürich (CH)**

(56) References cited:
**EP-A1- 0 834 723     US-A- 5 062 446
US-A- 5 865 205**

# EP 4 497 052 B1

## Description

### FIELD OF DISCLOSURE

The present disclosure relates to a method and devices for controlling a flow control system in a Heating, Ventilating and Air Conditioning (HVAC) system. Specifically, the present disclosure relates to a method and a control device for controlling a flow control system in an HVAC system, and a flow control system for the HVAC system with an actuated valve for adjusting the flow of fluid in the HVAC system.

### BACKGROUND OF THE DISCLOSURE

By regulating the flow of fluid through a thermal energy exchanger of an HVAC system, it is possible to adjust the amount of energy exchanged by the thermal energy exchanger, e.g. to adjust the energy transfer rate of a thermal energy exchanger to heat or cool a room in a building. While the fluid transport through the fluid circuit of the HVAC system is driven by one or more pumps, the flow (i.e. the flow of fluid or the flow rate) is typically regulated by varying the orifice (opening) or position of valves, e.g. manually or by way of actuators. It is known that the efficiency of thermal energy exchangers, e.g. heat exchangers, is reduced at high flow rates where the fluid rushes at an increased rate through the thermal energy exchangers, without resulting in a significant increase in energy exchange.

WO 2012/065275, in the name of the applicant, describes a method and a control device for controlling the opening of a valve in an HVAC system to regulate the flow of fluid through a thermal energy exchanger and thereby adjust the amount of thermal energy exchanged by the thermal energy exchanger. The opening of the valve is controlled depending on an energy-per-flow gradient which is determined by measuring at consecutive points in time the flow through the valve and the amounts of thermal energy exchanged by the thermal energy exchanger at these points in time. The energy-per-flow gradient is determined dynamically and is used as a basis for setting a slope threshold for the thermal energy exchanger so that there is no need to store fixed threshold values. WO 2020/114668, in the name of the applicant, describes a method and a control system for controlling the orifice of a valve in an HVAC system to regulate the flow of a through a thermal energy exchanger and thereby adjust the energy transfer rate of the thermal energy exchanger. In a first mode of operation, the flow of fluid through the thermal energy exchanger is controlled within efficiency constraints on the energy transfer rate with respect to an efficiency threshold value. Upon receiving an override signal, the orifice of the valve is controlled in a second mode of operation where the flow of fluid through the thermal energy exchanger is not controlled with respect to the first efficiency threshold value.

US 5 062 446 A discloses, according to its abstract, an intelligent mass flow controller for controlling the mass flow of gas to a semiconductor processing chamber. A sensing circuit measures a difference in temperature across a sensing tube and translates this difference to adjust a valve for controlling the mass flow. A microcontroller which includes a CPU, signal processing and software routines continually monitors the various parameters and provide "on the fly" corrections, as well as providing diagnostics and record retention.

Nevertheless, thermal energy exchangers, particularly heat exchangers, exhibit nonlinear transfer characteristics, indicated by a nonlinear relationship between flow and transferred thermal energy or power, respectively.

In connection with pressure dependent valves, typically, (mechanical) control valves with equal percentage inherent valve characteristics are used, as the equal percentage characteristics of the valve are approximately inverse to typical transfer characteristics of thermal energy exchangers, and the combination of the valve characteristics and transfer characteristics produces at least approximately linear combined characteristics.

In connection with (electronic) pressure independent valves, where fluctuations of flow caused by pressure variances are controlled with a feedback flow control loop, the nonlinearity of the transfer characteristics of thermal energy exchangers is accounted for at least to some extent by way of setpoint conditioning. Setpoint conditioning adjusts the flow setpoint, e.g. provided by a building automation system or an air temperature controller, inverse to the transfer characteristics of the thermal energy exchanger.

However, both known solutions, using control valves with equal percentage inherent valve characteristics and setpoint conditioning, provide merely an approximation of an overall linear performance, because the actual transfer characteristics of thermal energy exchangers, as installed in an HVAC system, are not precisely known and change in a dynamic HVAC system. Furthermore, using linear feedback flow controllers, such as PI(D) controllers (Proportional, Integral, Derivative), with fixed control parameters, for controlling actuated valves to adjust the flow through a thermal energy exchanger, fail to provide consistent control performance over the entire operating range of the actuated valves and thermal energy exchangers.

### SUMMARY OF DISCLOSURE

It is an object of the present disclosure to provide a method and a control device for controlling a flow control system in an HVAC system, and a flow control system for an HVAC system, which method, control device, and control system do not have at least some of the disadvantages of the prior art. In particular, it is an object of the present disclosure to provide the method, the control device, and the flow control system for an improved control of the flow of fluid in the HVAC system.

According to the present disclosure, these objects are achieved through the features of the independent claims. In addition, further advantageous embodiments follow from the dependent claims and the description.

A flow control system in an HVAC system comprises an actuated valve for adjusting the flow of fluid in a fluid transport circuit of the HVAC system.

According to the present disclosure, the above-mentioned objects are particularly achieved in that in a method for controlling the flow control system in the HVAC system, an electronic circuit performs the following steps: receiving and storing, during operation of the flow control system, a plurality of flow values measured in the fluid transport circuit by a flow sensor for respective valve positions of the actuated valve; determining, during operation of the flow control system, installed valve characteristics of the actuated valve as installed in the HVAC system, using the plurality of flow values for the respective valve positions; and controlling the actuated valve to adjust the flow of fluid in the fluid transport circuit, using the installed valve characteristics.

In an embodiment, the electronic circuit further receives a flow setpoint, determines a feedforward control value from the flow setpoint and the installed valve characteristics, and uses the feedforward control value to control the actuated valve to adjust the flow of fluid in the fluid transport circuit. For example, the electronic circuit determines the feedforward control value using the inverse installed valve characteristics.

In an embodiment, the electronic circuit further determines a feedback control value from the flow setpoint and a current flow value measured in the fluid transport circuit by the flow sensor, and further uses the feedback control value to control the actuated valve to adjust the flow of fluid in the fluid transport circuit.

In an embodiment, the electronic circuit further determines a feedback control value from a flow setpoint, using a current flow value measured in the fluid transport circuit by the flow sensor and the installed valve characteristics, and uses the feedback control value to control the actuated valve to adjust the flow of fluid in the fluid transport circuit.

In an embodiment, the electronic circuit determines the feedforward control value and the feedback control value, and uses the feedforward control value and the feedback control value, to control the actuated valve to adjust the flow of fluid in the fluid transport circuit.

In an embodiment, the electronic circuit adjusts control parameters to determine the feedback control value with reduced responsiveness in a lower operating range of the actuated valve.

In an embodiment, the electronic circuit adjusts control parameters to determine the feedback control value depending on a rate of change of the flow setpoint. For example, the electronic circuit adjusts the control parameters with reduced responsiveness for a high rate of change of the flow setpoint, above an upper change rate threshold; and/or adjusts control parameters to determine the feedback control value with increased responsiveness for a low rate of change of the flow setpoint, below a lower change rate threshold.

In an embodiment, to determine the feedback control value, the electronic circuit adjusts the control parameters based on the installed valve characteristics.

In an embodiment, the electronic circuit determines the installed valve characteristics to indicate for any particular valve position, in an operating range of the actuated valve, the flow of fluid at that particular valve position of the actuated valve for a particular differential pressure over the fluid transport circuit and/or normalized for any differential pressure over the fluid transport circuit.

In an embodiment, the electronic circuit determines the installed valve characteristics for a complete operating range of the actuated valve, from a minimum valve position, particularly a fully closed valve position, to a maximum valve position, particularly a fully open valve position. Typically, in the minimum valve position, there is no flow.

In an embodiment, the electronic circuit determines the installed valve characteristics by iteratively adjusting parameters of a mathematical approximation function which defines the installed valve characteristics, using the plurality of flow values for the respective valve positions.

In an embodiment, the electronic circuit determines the installed valve characteristics by fitting a mathematical approximation function to the plurality of flow values for the respective valve positions over a complete operating range of the actuated valve and/or over a partial operating range of the actuated valve around a current operating point.

In an embodiment, the electronic circuit determines an estimated current differential pressure over the fluid transport circuit, using the installed valve characteristics and temporal changes of the flow of fluid in the fluid transport circuit; and generates an output signal indicative of the estimated current differential pressure.

In an embodiment, the electronic circuit stores a first set of the plurality of flow values and respective valve positions of the actuated valve, measured when the respective valve positions are attained by the actuated valve in a process of reducing the flow of fluid in the fluid transport circuit; stores a second set of the plurality of flow values and respective valve positions of the actuated valve, measured when the respective valve positions are attained by the actuated valve in a process of increasing the flow of fluid in the fluid transport circuit; determines, during operation of the flow control system first installed valve characteristics, using the first set of the plurality of flow values, second installed valve characteristics, using the second set of the plurality of flow values, and/or intermediate installed valve characteristics, using the first set of the plurality of flow values and the second set of the plurality of flow values; and controls the actuated valve to adjust the flow of fluid in the fluid transport circuit, using the first installed valve characteristics, the second installed valve characteristics, and/or the intermediate installed valve characteristics.

In an embodiment, the electronic circuit receives a temperature value, and uses the temperature value for determining a flow setpoint for the flow control system providing through the fluid transport circuit the flow of fluid to a thermal energy exchanger.

In an embodiment, the electronic circuit determines the installed valve characteristics using inherent valve characteristics of the actuated valve.

In addition to the method of controlling a flow control system in an HVAC system, the present disclosure also relates to a control device for controlling the flow control system in the HVAC system. The control device comprises an electronic circuit configured to perform the method of controlling the flow control system in the HVAC system.

In addition to the method of controlling a flow control system in an HVAC system, and the control device for controlling the flow control system in the HVAC system, the present disclosure also relates to a flow control system for an HVAC system. The flow control system comprises an actuated valve configured to adjust a flow of fluid in a fluid transport circuit of the HVAC system, a flow sensor configured to measure a flow of fluid in the fluid transport circuit, and an electronic circuit configured to perform the following steps: receiving and storing, during operation of the flow control system in the HVAC system, a plurality of flow values measured in the fluid transport circuit by the flow sensor for respective valve positions of the actuated valve; determining, during operation of the flow control system in the HVAC system, installed valve characteristics of the actuated valve as installed in the HVAC system, using the plurality of flow values for the respective valve positions; and controlling the actuated valve to adjust the flow of fluid in the fluid transport circuit, using the installed valve characteristics.

In an embodiment, the electronic circuit is further configured to perform the method of controlling the flow control system in the HVAC system.

In addition to the method of controlling the flow control system in the HVAC system, the control device for controlling the flow control system in the HVAC system, and the flow control system for the HVAC system, the present disclosure also relates to a computer program product. The computer program product comprises a non-transient computer readable medium having stored thereon computer program code configured to control a processor of a flow control system in an HVAC system, such that the processor performs the method of controlling the flow control system in the HVAC system.

## BRIEF DESCRIPTION OF THE DRAWINGS

The present disclosure will be explained in more detail, by way of example, with reference to the drawings in which:

Figure 1:    shows a block diagram illustrating schematically an HVAC system with a flow control system comprising an actuated valve for adjusting the flow of fluid in a fluid transport circuit of the HVAC system.

Figure 1a:    shows a block diagram illustrating schematically an HVAC system with a flow control system having at least some functions executed on a remote computer system, connected via a communication network.

Figure 2:    shows a flow diagram illustrating schematically processes and steps for controlling a flow control system in an HVAC system.

Figure 3:    shows a flow diagram illustrating schematically processes and steps for controlling an actuated valve of a flow control system in an HVAC system.

Figure 4:    shows a graph illustrating examples of data points with performance data, including valve positions of an actuated valve and flows of fluid measured in the respective valve positions.

Figure 5:    shows a graph illustrating examples of data points with performance data, including valve positions of an actuated valve and flows of fluid measured in the respective valve positions, and an overlaid curve of a mathematical approximation function, fitted to the data points and representing the installed valve characteristics of the actuated valve.

Figure 6:    shows a graph illustrating an example of a curve of a mathematical approximation function which was fitted to data points with performance data, including valve positions of an actuated valve and flows of fluid measured in the respective valve positions, and represents the installed valve characteristics of the actuated valve.

## DETAILED DESCRIPTION OF THE EMBODIMENTS

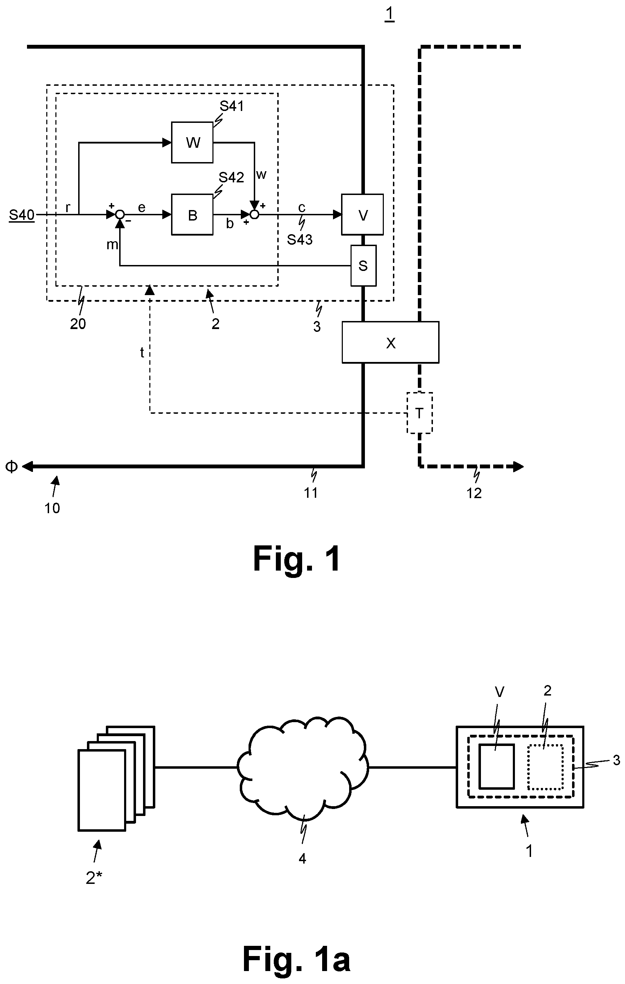

In Figure 1, reference numeral 1 relates to a heating, ventilation, and air conditioning (HVAC) system. The HVAC system 1 is installed in a building or in another spatial facility, such as a ship or a train, and is used to provide fluid via fluid transport circuits 10 to one or more thermal energy exchangers X for heating and/or cooling. The person skilled in the art will understand that the HVAC system 1 in Figure 1 is extremely simplified. In typical installations, the HVAC system 1 comprises a plurality of fluid transport circuits 10 transporting the fluid to a plurality of thermal energy exchangers X, e.g. heat exchangers, radiators, and/or chillers. In the simplified example of Figure 1, the thermal energy exchanger X is depicted with a primary fluid circuit 11 and an optional secondary fluid circuit 12. In a heating configuration or scenario, the primary fluid circuit 11 provides heated fluid, e.g. hot water (possibly including an antifreeze such as glycol), to the thermal energy exchanger X which transfers thermal energy, "heat", from the fluid circulating in the primary fluid circuit 11 to a fluid circulating in the secondary fluid circuit 12, e.g. air which is used to heat a room in the building. In a cooling configuration or scenario, the primary fluid circuit 11 provides cooled fluid, e.g. cold water (possibly including an antifreeze such as glycol), to the thermal energy exchanger X which transfers (absorbs) thermal energy, "heat", from the fluid circulating in the secondary fluid circuit 12, e.g. air which is used to cool a room in the building, to the fluid circulating in the primary fluid circuit 11. The person skilled in the art will understand that the HVAC system 1 further comprises fluid drivers to move the fluid through the fluid transport circuits 10, e.g. one or more pumps for driving liquid fluids and/or one or more ventilators for moving gaseous fluids, and heaters and/or chillers for heating and/or cooling the fluid circulating in the primary fluid circuit 11.

The present disclosure is directed particularly to controlling the flow of fluid $\Phi$ in the fluid transport circuit 10. In a two-circuit installation, where a primary fluid circuit 11 is coupled via a thermal energy exchanger X to a secondary fluid circuit 12, the fluid transport circuit 10 is part of the primary fluid circuit 11.

As illustrated in Figure 1, for controlling the flow of fluid $\Phi$ in the fluid transport circuit 10, the HVAC system 1 comprises a flow control system 3 with an actuated valve V for adjusting the flow of fluid $\Phi$ in the fluid transport circuit 10. The actuated valve V comprises a mechanical valve, e.g. a ball valve, a butterfly valve or a plug valve, with an adjustable orifice, and an electric motor mechanically coupled to the mechanical valve for actuating the mechanical valve to different valve positions with different respective sizes of orifice. The actual flow of fluid $\Phi$ in the fluid transport circuit 10 is adjusted by changing the valve position and thus the size of orifice of the actuated valve V. In a fully closed position of the actuated valve V, there is neither an orifice nor a flow of fluid $\Phi$. In a fully open position of the actuated valve V, there is a fully open orifice and an associated flow of fluid $\Phi$ in the fluid transport circuit 10. As will be explained below, the actual flow of fluid $\Phi$ is determined by valve characteristics of the valve and by the differential pressure over the valve. Thus, the actual flow of fluid $\Phi$ is influenced by the pressure and by pressure changes in the fluid transport circuit 10. Pressure changes are caused by changes and disturbances in the fluid transport system of the HVAC system 1, e.g. by changes in valve positions of valves in parallel fluid transport circuits or fluid circuits, respectively.

There is a distinction between inherent valve characteristics and installed valve characteristics of a valve. The inherent valve characteristics of a valve define the relationship between valve position and flow of fluid $\Phi$ at a constant differential pressure over the valve. The inherent valve characteristics of a valve are typically published by the manufacturer of the valve and are based on tests performed in a test system where the differential pressure across the valve is held constant at all valve positions and flow rates, i.e. the flow of fluid $\Phi$ measured for the respective valve position. The *installed* valve characteristics of a valve define the relationship between valve position and flow of fluid $\Phi$ in the actual, specific HVAC system 1, where the valve is installed. Thus, the installed valve characteristics take into account any changes in the differential pressure across the valve which are caused by piping pressure losses, for example. These piping pressure losses include various pressure losses caused by components in the fluid transport circuit 10 of the HVAC system which are fluidly connected to the valve V. These components include, for example, pipes, fittings, heat exchangers, chillers, filters, and/or other valves etc.

As illustrated in Figure 1, the flow control system 3 further comprises a control device 2. The control device 2 comprises one or more electronic circuits 20, such as one or more programmable processors and/or application specific integrated circuits (ASIC). Depending on the embodiment and/or configuration, the control device 2 is in a common housing with the electric motor of the actuated valve V, it is arranged in a separate housing attached to the electric motor, or it is arranged in a separate housing detached and separate from the electric motor. For example, the detached control device 2 may be arranged in another HVAC component, such as a flow sensor, or in a computer system, connected to the flow control system 3 or the valve V, respectively, via a communication link or a communication network. Figure 1a illustrates an example where the control device or at least some functions of the control device, e.g. the determination of the installed characteristics, are implemented in a remote computer system 2*, e.g. a cloud-based computer system 2*, connected to the flow control system 3 or the valve V or its local control device 2, respectively, via a communication network 4, e.g. via the Internet through a wired or wireless communication link.

In any case, the control device 2 is configured to transfer control signals to the electric motor via a wired or wireless communication link. Furthermore, the control device 2 is configured to receive from the electric motor operational data via the communication link.

As illustrated in Figure 1, the flow control system 3 further comprises a flow sensor S, for example an ultrasonic flow sensor. The flow sensor S is configured to measure the actual flow of fluid $\Phi$ in the fluid transport circuit 10. Depending on the embodiment and/or configuration, the flow sensor S is arranged upstream or downstream of the actuated valve V. The flow sensor S is connected to the control device 2 via a wired or wireless communication link.

As is further illustrated in Figure 1, the HVAC system 1 comprises an optional temperature sensor T configured to measure a current temperature associated with the secondary fluid circuit 12. For example, the temperature sensor T is an air temperature sensor arranged and configured to measure the temperature of the air, e.g. at an exit port of the thermal energy exchanger X or in a room supplied with air by the thermal energy exchanger X. In an embodiment, the temperature sensor T is connected to the control device 2 via a wired or wireless communication link.

In the following paragraphs, described with reference to Figures 1, 2 and 3, are possible processes and steps performed by the electronic circuit 20 of the control device 2 for controlling the flow control system 3.

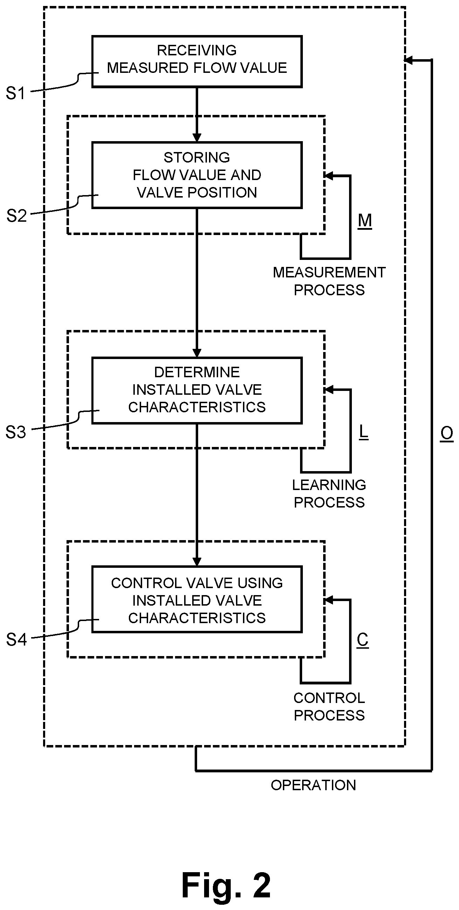

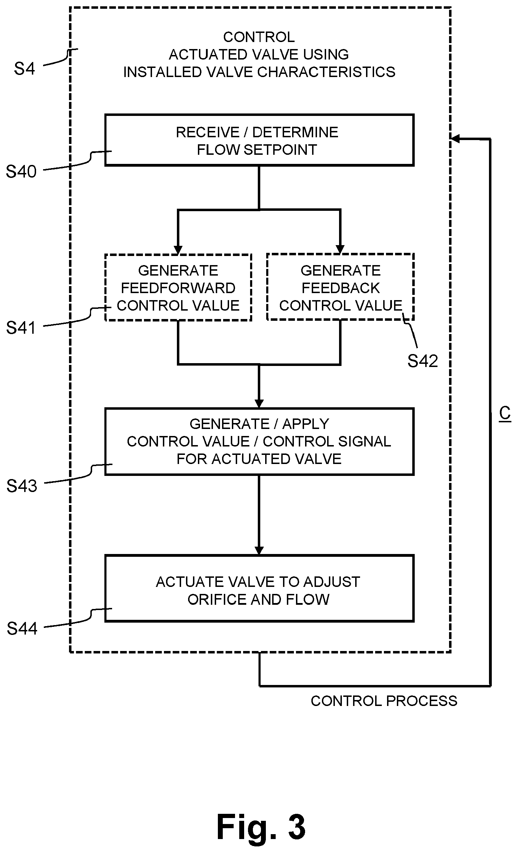

In Figure 2, reference numeral O refers schematically to the ongoing operation of HVAC system 1 and its flow control system 3. As is further illustrated schematically in Figure 2, as part of this ongoing operation O, there are ongoing or at least periodically performed processes executed by the electronic circuit 20 of the control device 2, including a measurement process M, a learning process L, and a control process C. In other words, during operation O of the actuated valve V, the electronic circuit 20 of the control device 2 executes the measurement process M, the learning process L, and the control process C. The person skilled in the art will understand that these processes do not necessarily have to be executed on an ongoing basis in parallel. More specifically, the measurement process M and the control process C do not have to be ongoing parallel processes; rather, as will be described in more detail later with reference to step S42 of Figure 3, the electronic circuit 20 of the control device 2 executes the control process C on an ongoing basis by using the current flow value m, measured in the fluid transport circuit 10 by the flow sensor S, and a received flow setpoint r to generate a control value for controlling the valve V and adjusting the flow of fluid $\Phi$ in the fluid transport circuit 10 of the HVAC system 1.

As illustrated in Figure 2, the ongoing operation O of HVAC system 1 and its flow control system 3 comprises execution of step S1.

In step S1, the electronic circuit 20 of the control device 2 receives or obtains a measurement of the current flow of fluid $\Phi$ in the fluid transport circuit 10, as indicated by reference numeral m. The electronic circuit 20 of the control device 2 further determines the current valve position of the actuated valve V, more specifically, the valve position for which the current flow of fluid $\Phi$ was measured. Depending on the embodiment, the electronic circuit 20 of the control device 2 has recorded and stored the valve position, as previously commanded to the actuated valve V, or the electronic circuit 20 of the control device 2 receives or obtains the current valve position from the actuated valve V or its electric motor, respectively. Depending on the embodiment and/or configuration, the valve position is determined directly at the valve V, e.g. using a potentiometer and/or an encoder, derived from the motor position or angle, e.g. by counting motor rotations and considering the gear ratio, or by merely using the position setpoint for the valve V or its motor, respectively.

As illustrated in Figure 2, the measurement process M comprises execution of step S2.

In step S2, the electronic circuit 20 of the control device 2 stores the measured flow of fluid $\Phi$ linked to the valve position for which the flow was measured. In an embodiment, the electronic circuit 20 of the control device 2 further stores a time stamp and/or a sequence number linked to the performance data, which includes the recorded flow and valve position. As the measurement process M is ongoing or at least periodically repeated, the electronic circuit 20 of the control device 2 thus determines and records a temporal course of measured flow and respective valve positions.

As illustrated in Figure 2, during the learning process L the electronic circuit 20 of the control device 2 executes step S3.

In step S3, the electronic circuit 20 of the control device 2 uses the performance data measured and recorded by the measurement process M to determine the actual installed valve characteristics of the actuated valve V. More specifically, the electronic circuit 20 of the control device 2 determines the actual installed valve characteristics of the actuated valve V from the plurality of stored sets of performance data, each set including a data point with the measured flow of fluid $\Phi$ and respective valve position for which the flow of fluid $\Phi$ was measured.

Depending on the embodiment, the electronic circuit 20 of the control device 2 determines the installed valve characteristics of the actuated valve V by learning the entire curve f of the installed valve characteristics or uses the known inherent valve characteristics of the actuated valve V and learns the valve authority and the differential pressure across the fluid transport circuit 10. Alternatively, instead of the valve authority, determined is the flow rate coefficient (or corresponding pressure loss coefficient) of the fluid transport circuit 10, without the valve V.

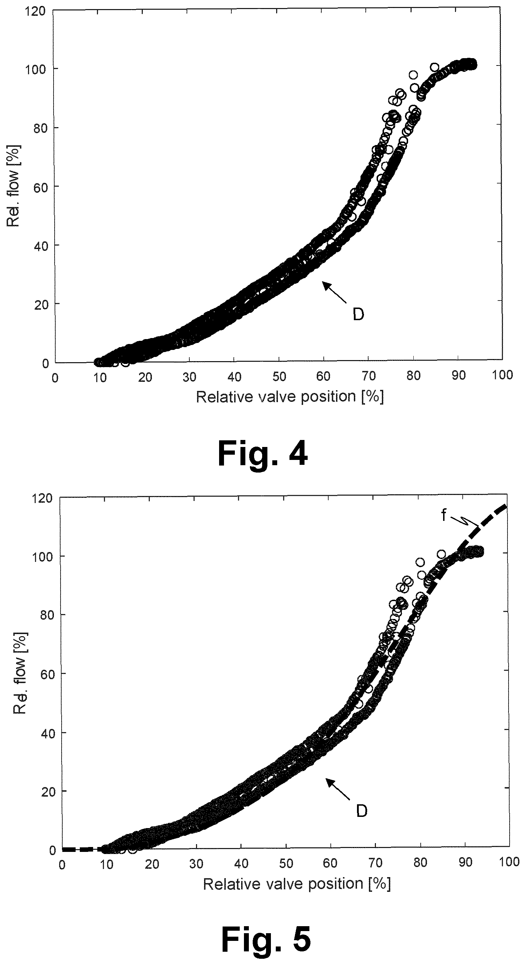

Figures 4 and 5 show examples of recorded performance data. More specifically, Figures 4 and 5 show examples of a plurality of measured and stored data points D with the measured flow of fluid $\Phi$, indicated as a relative flow from 0 to 100% (maximum flow) and respective valve position, indicated as relative valve position from 0 (fully closed) to 100% (fully open). The data points D or their associated values of flow of fluid $\Phi$, respectively, are measured at essentially constant pressure across fluid transportation circuit. In an embodiment, the data points are measured and stored with an even or uniform distribution over the valve positions. For example, a number of position bins are used to store an equal number of measured flow $\Phi$ values in each position bin, associated in each case with one of the defined valve positions.

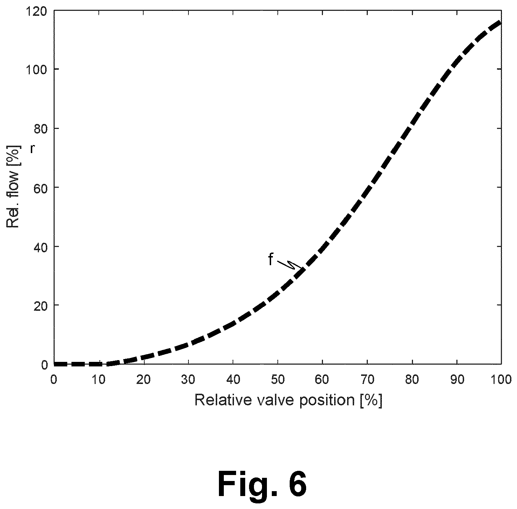

As illustrated schematically in the examples of Figures 5 and 6, the electronic circuit 20 of the control device 2 determines the installed valve characteristics of the actuated valve V by fitting a mathematical approximation function $f$ to the plurality of stored data points D with the measured flows of fluid $\Phi$ and respective valve positions. Depending on the embodiment and/or configuration, the electronic circuit 20 of the control device 2 determines the installed valve characteristics of the actuated valve V over the complete operating range of the actuated valve V, using the plurality of stored data points D for the complete operating range, or over a partial operating range of the actuated valve V around a current operating point, using a subset of the plurality of stored data points D for the partial operating range. The complete operating range of the actuated valve V extends from a minimum valve position, particularly a fully closed valve position, to a maximum valve position, particularly a fully open valve position.

In an embodiment, the electronic circuit 20 of the control device 2 fits the mathematical approximation function f to the data points D with the measured flows of fluid $\Phi$ and respective valve positions by iteratively adjusting parameters $c_1 ... c_n$ of the mathematical approximation function f. For example, the electronic circuit 20 of the control device 2 uses a measure J to determine how well the mathematical approximation function f fits the plurality of data points D with the measured flows of fluid $\Phi$ and respective valve positions, and determines the function parameters $c_1 ... c_n$ and thus the mathematical approximation function f by minimizing the measure $J$ with an optimization algorithm. In an embodiment, the electronic circuit 20 of the control device 2 determines the function parameters $c_1 ... c_n$ iteratively, for example, by executing the optimization algorithm repeatedly in defined iteration intervals.

Typically, for a valve V with inherent equal percentage valve characteristics, the curve of the installed valve characteristics has an S-shaped form. Accordingly, the electronic circuit 20 of the control device 2 uses a mathematical approximation function $f(x, c_1, ..., c_n)$ which captures the S-shaped form, whereby x is the valve position and $c_1 ... c_n$ are the parameters of the mathematical approximation function f. The person skilled in the art will understand, that for a valve with an inherent linear valve characteristic, the curve of the installed valve characteristics has the shape of a line bent upwards (referred to as a quick opening curve).

Below, functions $f_1$, $f_2$, and $f_3$ are given as different examples of the function $f(x, c_1, ..., c_n)$:

$$f_1(x,\ c_1, c_2, c_3, c_4) = c_1 \cdot \frac{1 - e^{-c_3\left(\frac{1 - e^{-c_2 \cdot (x - c_4)}}{1 - e^{-c_2}}\right)}}{1 - e^{-c_3}},$$

$$f_2(x, c_1, c_2, c_3) = \frac{c_1}{1 + e^{-c_2 \cdot (x - c_3)}},$$

$$f_3(x, c_1, ..., c_n) = \sum_{i=0}^{n} c_i \cdot x^i, n \geq 0,$$

whereby x is the relative valve position and $c_i (i = 1...n)$ are the function parameters.

Below, an example of the measure $J$ of fit is indicated:

$$J(c_1,\ ...,\ c_n) = \frac{W_{local}}{n_{local}} \sum_{i=1}^{n_{local}} \left( \dot{V}_{local}^{meas}(i) - f(x_{local}^{meas}(i), c_1, ..., c_n) \right)^2$$

$$+ \frac{W_{global}}{n_{global}} \sum_{i=1}^{n_{global}} \left( \dot{V}_{global}^{meas}(i) - f(x_{global}^{meas}(i), c_1, ..., c_n) \right)^2,$$

whereby, the upper term indicates the fitting of the mathematical approximation function f to the measurements, i.e. the data points, around the current point of operation (operation point); and the lower term indicates the fitting of the mathematical approximation function f to the measurements, i.e. the data points, over the complete range of operation (operating range). Furthermore, $n_{local}$ indicates the number of measurements around the current operation point, $n_{global}$ is the number of measurements distributed over the complete operating range, $W_{local}$ indicates the weighting of local measurements, $W_{global}$ indicates the weighting of global measurements, $\dot{V}^{meas}(i)$ is the measured flow of fluid $\Phi$, and $x^{meas}$

(*i*) is the respective valve position recorded.

Depending on the embodiment, the installed valve characteristics are determined such that they indicate for any particular valve position, in an operating range of the actuated valve V, the flow of fluid Φ at that particular valve position of the actuated valve V for a particular differential pressure over the fluid transport circuit 10 (or the primary fluid circuit 11, respectively) or normalized for any differential pressure over the fluid transport circuit 10 (or the primary fluid circuit 11, respectively).

In an embodiment, the installed valve characteristics are determined by taking into account the hysteresis of the actuated valve V that is exhibited when the actuated valve V, and correspondingly its motor, is operated in different directions, i.e. upon change of its operating direction. In the opening direction, the orifice of the valve is increased to increase the flow of fluid Φ. In the opposite closing direction, the orifice of the valve is decreased to reduce the flow of fluid Φ. For the purpose of considering hysteresis, the electronic circuit 20 of the control device 2 stores two different sets of data points with the measured flow of fluid Φ and respective valve position, one set of data points measured when the actuated valve V is operated in the opening direction, when the actuated valve V is in the process of increasing the flow of fluid Φ in the fluid transport circuit 10; and another set of data points measured when the actuated valve V is operated in the closing direction, when the actuated valve V is in the process of decreasing the flow of fluid Φ in the fluid transport circuit 10. Depending on the embodiment and/or configuration, during operation O of the flow control system 3, the electronic circuit 20 of the control device 2 determines two different installed valve characteristics for the actuated valve V, one for the opening direction, using the set of data points measured for the opening direction, and another one for the closing direction, using the set of data points measured for the closing direction, and/or an intermediate installed valve characteristics, using both sets of data points. Alternatively, the hysteresis is determined separately, e.g. by measuring the opening position (when the valve is operated in opening direction) and the closing position (when the valve is operated in closing direction) at a fixed flow rate, e.g. 5% flow. The intermediate characteristic is then "shifted" by this learned hysteresis.

As illustrated in Figures 2 and 3, as part of the control process C, in step S4, the electronic circuit 20 of the control device 2 uses the determined installed valve characteristics to control the actuated valve V. In case two installed valve characteristics are determined, one for opening direction and another one for closing direction, the electronic circuit 20 of the control device 2 uses the installed valve characteristics determined for the opening direction to control the actuated valve V when the actuated valve V is actually operated in the opening direction, and the electronic circuit 20 of the control device 2 uses the installed valve characteristics determined for the closing direction to control the actuated valve V when the actuated valve V is actually operated in the closing direction. More specifically, the electronic circuit 20 of the control device 2 uses the determined installed valve characteristics to generate a control value or control signal c for the actuated valve V to adjust the flow of fluid Φ to obtain a desired flow of fluid in the fluid transport circuit 10.

The desired flow of fluid in the fluid transport circuit 10 is determined by a flow setpoint r. Depending on the application and configuration, the flow setpoint r is determined by a building control system, a room controller, a thermostat, or the like, arranged at the control device 2 or external to the control device 2.

As illustrated in Figures 1 and 3, in step S40, the electronic circuit 20 of the control device 2 receives the flow setpoint r. As described later in more detail, in an embodiment, the electronic circuit 20 of the control device 2 determines the flow setpoint r, further using a temperature value, e.g. an air temperature value t.

Using the flow setpoint r, the electronic circuit 20 of the control device 2 generates a control value or control signal c for the actuated valve V. More specifically, the electronic circuit 20 of the control device 2 uses the determined installed valve characteristics to generate the control value or control signal c for the actuated valve V to adjust the flow of fluid Φ in the fluid transport circuit 10 to obtain the desired flow of fluid defined by the flow setpoint r. As illustrated in Figures 1 and 3, in step S43, the control value or control signal c is applied to the actuated valve V for controlling the actuated valve V to adjust the flow of fluid Φ in the fluid transport circuit 10.

As illustrated in Figure 3, responsive to the applied control value or control signal c, in step S44, the motor of the actuated valve V actuates the mechanical valve to adjust its orifice, as demanded by the control value or control signal c.

As further illustrated schematically in Figure 1, the electronic circuit 20 of the control device 2 implements one or two control blocks, a feedback control block B and/or a feedforward control block W.

As illustrated in Figures 1 and 3, by implementing the feedback control block B, in step S42, the electronic circuit 20 of the control device 2 generates a feedback control value b from the flow setpoint r and the current flow value m measured in the fluid transport circuit 10 by the flow sensor S. More specifically, the electronic circuit 20 of the control device 2 generates the feedback control value b using the difference between the measured flow value m and the flow setpoint r, indicated by error value e. In an embodiment, the electronic circuit 20 of the control device 2 further uses the determined installed valve characteristics to generate the feedback control value b. In an embodiment, the electronic circuit 20 of the control device 2 uses the determined installed valve characteristics to implement an adaptive control scheme, in particular gain scheduling.

In a gain-scheduled controller architecture, the controller gains are "scheduled" with one or more scheduling variables, such as a measured output or a system state. Gain scheduling makes it possible, to design controllers for nonlinear controlled systems based on linear system theory. This may be achieved by linearizing a nonlinear plant model at different operating conditions to obtain linear models that describe plant behaviour in the vicinity of the operating point that a linear model corresponds to. Different controller gains may be determined for the linear plant models.

In an embodiment the electronic circuit 20 of the control device 2 uses the measured flow value m and the determined installed valve characteristics to implement gain scheduling. That means that the controller gain is scheduled with the measured flow value m.

In another embodiment, the electronic circuit 20 of the control device 2 uses the current valve position x and the determined installed valve characteristics to implement gain scheduling.

In a particular embodiment the gain of an I-controller is be changed in dependence of the local slope of the determined installed valve characteristic f(x), in order to guarantee a stable controller behaviour over the entire operating range. Here the controller parameter is chosen to be inversely proportional to the local slope of the installed flow characteristic which may be obtained by deriving the valve characteristic f(x) with respect to the valve position x.

In another adaptive control method, the determined installed valve characteristic is used to directly compensate for non-linearities of the flow control system. This is achieved by applying the inverse function of the determined installed valve characteristic to the controller output signal to obtain a corrected valve position setpoint. Alternatively, the inverse function is applied to the measured flow value.

As illustrated in Figures 1 and 3, by implementing the feedforward control block W, in step S41, the electronic circuit 20 of the control device 2 generates a feedforward control value w from the flow setpoint r. More specifically, the electronic circuit 20 of the control device 2 generates the feedforward control value w using the flow setpoint r and the determined installed valve characteristics to generate the feedforward control value w. In an embodiment, the electronic circuit 20 of the control device 2 generates the feedforward control value w using an inverse curve of the determined installed valve characteristics, i.e. the inverse installed valve characteristics.

In the case that the electronic circuit 20 of the control device 2 implements both the feedback control block B and the feedforward control block F, in step S43, the control value or control signal c for the actuated valve V is generated by the electronic circuit 20 of the control device 2 using the feedforward control value w *and the* feedback control value b. More specifically, the electronic circuit 20 of the control device 2 generates the control value or control signal c for the actuated valve V as a sum of the feedforward control value w and the feedback control value b.

Otherwise, in the case that the electronic circuit 20 of the control device 2 implements only one of the control blocks, the feedback control block B or the feedforward control block W, in step S43, the control value or control signal c for the actuated valve V is generated by the electronic circuit 20 of the control device 2 using only the feedforward control value w or the feedback control value b, respectively.

In an embodiment, the electronic circuit 20 of the control device 2 adjusts control parameters of the feedback control block B to determine the feedback control value b in step S42 with reduced responsiveness in a lower operating range and/or with increased responsiveness in a higher operating range of the actuated valve V. The person skilled in the art will understand that the term "responsiveness" indicates the response characteristics of the feedback control block B to react to deviations of the measured flow value m from the flow setpoint r, as indicated by the error value e. With a reduced responsiveness in the lower operating range, the feedback control block B reacts more slowly to deviations when the actuated valve V operates in a lower operating range. The lower operating range of the actuated valve may be defined by a lower range of valve position, as determined by position threshold values and/or position boundary functions, and/or by low flow values, as determined by flow threshold values and/or flow boundary functions. Thereby, the responsiveness is implemented as a function which depends on valve position and/or flow.

In a further embodiment, the electronic circuit 20 of the control device 2 adjusts control parameters of the feedback control block B to determine the feedback control value b in step S42 with reduced responsiveness for a high rate of change of the flow setpoint r, i.e. for great changes of the flow setpoint r, e.g. indicated by exceeding an upper change rate threshold, as defined by an upper threshold value or an upper threshold function. Furthermore, the electronic circuit 20 of the control device 2 adjusts control parameters of the feedback control block B to determine the feedback control value b in step S42 with increased responsiveness for a low rate of change of the flow setpoint, i.e. for small changes of the flow setpoint r, e.g. indicated by remaining below a lower change rate threshold, as defined by a lower threshold value or a lower threshold function. Thus, the responsiveness changes as a function of the rate of change of the flow setpoint. For example, the function is implemented as a linear dependency, as a fixed threshold, or as another (nonlinear) dependency. In combination with the feedforward control block W, the reduced responsiveness of the feedback control block B for a high rate of change of the flow setpoint r has the advantage that for great changes of the flow setpoint r control of adjusting the flow of fluid is significantly left (passed) to the feedforward control block W. This has the advantage that the overall control system, i.e. the flow control system (inner control loop) and an overlaying temperature control system (outer control loop), becomes more stable, because the flow control system performs like a pure steering mechanism and, therefore, avoids problems caused by conflicting cascaded control loops. On the other hand, the increased responsiveness of the feedback control block B for a low rate of change of the flow setpoint r has the advantage that for small changes of the flow setpoint r when deviations of the measured flow value m from the flow setpoint r, as indicated by the error value e, is foremost caused by pressure changes, control of adjusting the flow of fluid is significantly left (passed) to the feedback control block B, such that deviations caused by pressure changes are compensated more quickly under the control of the feedback control block B.

In an embodiment, the electronic circuit 20 of the control device 2 uses the plurality of data points D to determine temporal changes of the flow of fluid Φ in the fluid transport circuit 10. By discerning rapid changes of the flow of fluid Φ, caused by pressure changes, from comparatively slower changes of the flow of fluid Φ along the installed valve characteristics, caused by changing the valve position, the electronic circuit 20 of the control device 2 determines an estimated differential pressure Δp over the fluid transport circuit 10. Effectively, the electronic circuit 20 of the control device 2 further augments approximating the installed valve characteristics $f(x)$ with the differential pressure Δp, i. e.

$$\tilde{f}(x) = f(x) \cdot \sqrt{\Delta p}$$ . The differential pressure Δp is learned simultaneously with the other function parameters. Flow control can be further improved by accounting for changes in differential pressure Δp. In an embodiment, the electronic circuit 20 of the control device 2 generates an output signal, e.g. on display, which indicates the estimated current differential pressure Δp.

In a further embodiment, the electronic circuit 20 of the control device 2 receives an air temperature value t from the air temperature sensor T. As outlined above, the temperature value t measured and provided by the air temperature sensor T indicates the current air temperature associated with the secondary fluid circuit 12, for example, the air temperature at the exit port of the thermal energy exchanger X, as illustrated in Figure 1, or the room temperature of a room supplied with air by the thermal energy exchanger X. The electronic circuit 20 of the control device 2 uses the air temperature value t to determine the flow setpoint r for the flow control system 3, such as to provide to the thermal energy exchanger X, through the fluid transport circuit 10 or the primary fluid circuit 11, respectively, a flow of fluid Φ that depends on the measured air temperature value t, and a temperature setpoint from a building automation system or an air temperature controller, for example.

It should be noted that, in the description, the sequence of the steps has been presented in a specific order, one skilled in the art will understand, however, that the computer program code may be structured differently and that the order of at least some of the steps could be altered, without deviating from the scope of the invention.

**Claims**

1.  A method of controlling a flow control system (3) in an HVAC system (1), which flow control system (3) comprises an actuated valve (V) for adjusting a flow of fluid (Φ) in a fluid transport circuit (10) of the HVAC system (1), the method comprising an electronic circuit (20) performing the following steps:

    receiving ((S1) and storing (S2), during operation (O) of the flow control system (3), a plurality of flow values (m) measured in the fluid transport circuit (10) by a flow sensor (S) for respective valve positions of the actuated valve (V);
    determining (S3), during operation (O) of the flow control system (3), installed valve characteristics of the actuated valve (V) as installed in the HVAC system (1), using the plurality of flow values (m) for the respective valve positions; and
    controlling (S4) the actuated valve (V) to adjust the flow of fluid (Φ) in the fluid transport circuit (10), using the installed valve characteristics.

2.  The method of claim 1, wherein the method further comprises the electronic circuit (20) receiving (S40) a flow setpoint (r), determining (S41) a feedforward control value (w) from the flow setpoint (r) and the installed valve characteristics, and using the feedforward control value (w) to control (S4) the actuated valve (V) to adjust the flow of fluid (Φ) in the fluid transport circuit (10).

3.  The method of claim 2, wherein the method further comprises the electronic circuit (20) determining (S42) a feedback control value (b) from the flow setpoint (r) and a current flow value (m) measured in the fluid transport circuit (10) by the flow sensor (S), and further using the feedback control value (b) to control (S4) the actuated valve (V) to adjust the flow of fluid (Φ) in the fluid transport circuit (10).

4.  The method of one of claims 1 or 2, wherein the method further comprises the electronic circuit (20) determining (S42) a feedback control value (b) from a flow setpoint (r), using a current flow value (m) measured in the fluid transport circuit (10) by the flow sensor (S) and the installed valve characteristics, and using the feedback control value (b) to control (S4) the actuated valve (V) to adjust the flow of fluid (Φ) in the fluid transport circuit (10).

5.  The method of one of claims 3 or 4, wherein the method further comprises the electronic circuit (20) adjusting control

EP 4 497 052 B1

parameters to determine (S42) the feedback control value (b) with reduced responsiveness in a lower operating range of the actuated valve (V).

6. The method of one of claims 3 to 5, wherein the method further comprises the electronic circuit (20) adjusting control parameters to determine (S42) the feedback control value (b) depending on a rate of change of the flow setpoint.

7. The method of one of claims 1 to 6, wherein the method comprises the electronic circuit (20) determining (S3) the installed valve characteristics to indicate for any particular valve position, in an operating range of the actuated valve (V), the flow of fluid (Φ) at that particular valve position of the actuated valve (V) for at least one of: at a particular differential pressure over the fluid transport circuit (10) or normalized for any differential pressure over the fluid transport circuit (10).

8. The method of one of claims 1 to 7, wherein the method comprises the electronic circuit (20) determining (S3) the installed valve characteristics for a complete operating range of the actuated valve (V), from a minimum valve position, particularly a fully closed valve position, to a maximum valve position, particularly a fully open valve position.

9. The method of one of claims 1 to 8, wherein the method comprises the electronic circuit (20) determining (S3) the installed valve characteristics by iteratively adjusting parameters of a mathematical approximation function which defines the installed valve characteristics, using the plurality of flow values (m) for the respective valve positions.

10. The method of one of claims 1 to 9, wherein the method comprises the electronic circuit (20) determining (S3) the installed valve characteristics by fitting a mathematical approximation function to at least one of: the plurality of flow values (m) for the respective valve positions over a complete operating range of the actuated valve (V) or over a partial operating range of the actuated valve (V) around a current operating point.

11. The method of one of claims 1 to 10, wherein the method further comprises the electronic circuit (20) determining an estimated current differential pressure over the fluid transport circuit (10), using the installed valve characteristics and temporal changes of the flow of fluid (Φ) in the fluid transport circuit (10); and generating an output signal indicative of the estimated current differential pressure.

12. The method of one of claims 1 to 11, wherein the method comprises the electronic circuit (20) storing (S2) a first set of the plurality of flow values (m) and respective valve positions of the actuated valve (V), measured when the respective valve positions are attained by the actuated valve (V) in a process of reducing the flow of fluid (Φ) in the fluid transport circuit (10); storing (S2) a second set of the plurality of flow values (m) and respective valve positions of the actuated valve (V), measured when the respective valve positions are attained by the actuated valve (V) in a process of increasing the flow of fluid (Φ) in the fluid transport circuit (10); determining (S3), during operation (O) of the flow control system (3), at least one of: first installed valve characteristics, using the first set of the plurality of flow values (m), second installed valve characteristics, using the second set of the plurality of flow values (m), or intermediate installed valve characteristics, using the first set of the plurality of flow values (m) and the second set of the plurality of flow values (m); and controlling (S4) the actuated valve (V) to adjust the flow of fluid (Φ) in the fluid transport circuit (10), using at least one of: the first installed valve characteristics, the second installed valve characteristics, or the intermediate installed valve characteristics.

13. The method of one of claims 1 to 12, wherein the method further comprises the electronic circuit (20) receiving a temperature value (t), and using the temperature value (t) for determining a flow setpoint (r) for the flow control system (3) providing through the fluid transport circuit (10) the flow of fluid (Φ) to a thermal energy exchanger (X).

14. The method of one of claims 1 to 13, wherein the method comprises the electronic circuit (20) determining (S3) the installed valve characteristics using inherent valve characteristics of the actuated valve (V).

15. A control device (2) for controlling a flow control system (3) in an HVAC system (1), which flow control system (3) comprises an actuated valve (V) for adjusting a flow of fluid (Φ) in a fluid transport circuit (10) of the HVAC system (1), the control device (2) comprising an electronic circuit (20) configured to perform the method of one of claims 1 to 14.

16. A flow control system (3) for an HVAC system (1), the flow control system (3) comprising an actuated valve (V) configured to adjust a flow of fluid (Φ) in a fluid transport circuit (10) of the HVAC system (1), a flow sensor (S) configured to measure a flow of fluid (Φ) in the fluid transport circuit (10), and an electronic circuit (20) configured to perform the following steps:

receiving (S1) and storing (S2), during operation (O) of the flow control system (3) in the HVAC system (1), a plurality of flow values (m) measured in the fluid transport circuit (10) by the flow sensor (S) for respective valve positions of the actuated valve (V);

determining (S3), during operation (O) of the flow control system (3) in the HVAC system (1), installed valve characteristics of the actuated valve (V) as installed in the HVAC system (1), using the plurality of flow values (m) for the respective valve positions; and

controlling (S4) the actuated valve (V) to adjust the flow of fluid (Φ) in the fluid transport circuit (10), using the installed valve characteristics.

17. The flow control system (3) of claim 16, wherein the electronic circuit (20) is further configured to perform the method of one of claims 2 to 14.

18. A computer program product comprising a non-transient computer readable medium having stored thereon computer program code configured to control a processor (20) of a flow control system (3) in an HVAC system (1), which flow control system (3) comprises an actuated valve (V) for adjusting a flow of fluid (Φ) in a fluid transport circuit (10) of the HVAC system (1), such that the processor (20) performs the method of one of claims 1 to 14.

**Patentansprüche**

1. Verfahren zum Regeln eines Durchflussregelungssystems (3) in einer HVAC-Anlage (1), wobei das Durchflussregelungssystem (3) ein betätigtes Ventil (V) zum Einstellen eines Fluiddurchflusses (Φ) in einem Fluidtransportkreislauf (10) der HVAC-Anlage (1) umfasst, wobei das Verfahren einen Schaltkreis (20) umfasst, der die folgenden Schritte ausführt:

Empfangen (S1) und Speichern (S2) während des Betriebs (O) des Durchflussregelungssystems (3) einer Vielzahl von Durchflusswerten (m), die in dem Fluidtransportkreislauf (10) durch einen Durchflusssensor (S) für jeweilige Ventilstellungen des betätigten Ventils (V) gemessen werden;

Bestimmen (S3) während des Betriebs (O) des Durchflussregelungssystems (3) der eingerichteten Ventileigenschaften des betätigten Ventils (V), wie es in der HVAC-Anlage (1) eingerichtet ist, unter Verwendung der mehreren Durchflusswerte (m) für die jeweiligen Ventilstellungen; und

Regeln (S4) des betätigten Ventils (V) zur Einstellung des Fluiddurchfluss (Φ) im Fluidtransportkreislauf (10) unter Verwendung der eingerichteten Ventileigenschaften.

2. Verfahren nach Anspruch 1, wobei das Verfahren ferner umfasst, dass der Schaltkreis (20) einen Durchflusssollwert (r) empfängt (S40), einen Vorsteuerungsregelungswert (w) aus dem Durchflusssollwert (r) und den eingerichteten Ventileigenschaften bestimmt (S41) und den Vorsteuerungsregelungswert (w) zur Verwendung bringt, um das betätigte Ventil (V) zu regeln (S4), um den Fluiddurchfluss des Fluids (Φ) im Fluidtransportkreislauf (10) einzustellen.

3. Verfahren nach Anspruch 2, wobei das Verfahren ferner umfasst, dass der Schaltkreis (20) einen Rückführungsregelungswert (b) aus dem Durchflusssollwert (r) und dem Durchflusswert (m) bestimmt (S42), der in dem Fluidtransportkreislauf (10) durch den Durchflusssensor (S) gemessen wird, und ferner unter Verwendung des Rückführungsregelungswert (b) das betätigte Ventil (V) regelt (S4), um den Fluiddurchfluss (Φ) in der Fluidtransportkreislauf (10) einzustellen.

4. Verfahren nach einem der Ansprüche 1 oder 2, wobei das Verfahren ferner umfasst, dass der Schaltkreis (20) einen Rückführungsregelungswert (b) aus einem Durchflusssollwert (r) unter Verwendung eines aktuellen Durchfluss (m), der in dem Fluidtransportkreislauf (10) durch den Durchflusssensor (S) gemessen wird, und den eingerichteten Ventileigenschaften bestimmt (S42), und unter Verwendung des Rückführungsregelungswerts (b) das betätigte Ventil (V) regelt (S4), um den Fluiddurchfluss (Φ) im Fluidtransportkreislauf (10) einzustellen.

5. Verfahren nach einem der Ansprüche 3 oder 4, wobei das Verfahren ferner umfasst, dass der Schaltkreis (20) Steuerparameter anpasst, um den Rückführungsregelungswert (b) mit reduzierter Ansprechfähigkeit in einem unteren Arbeitsbereich des betätigten Ventils (V) zu bestimmen (S42).

6. Verfahren nach einem der Ansprüche 3 bis 5, wobei das Verfahren ferner umfasst, dass der Schaltkreis (20) Regelparameter einstellt, um den Rückführungsregelungswert (b) in Abhängigkeit von einer Änderungsrate des Durchflusssollwerts zu bestimmen (S42).

7. Verfahren nach einem der Ansprüche 1 bis 6, wobei das Verfahren umfasst, dass der Schaltkreis (20) die Eigenschaften des eingerichteten Ventils bestimmt (S3), um für jede bestimmte Ventilstellung in einem Arbeitsbereich des betätigten Ventils (V) Folgendes anzuzeigen: den Fluiddurchfluss (Φ) an dieser bestimmten Ventilstellung des betätigten Ventils (V) für mindestens eines von: einem bestimmten Differenzdruck über dem Fluidtransportkreislauf (10) oder normiert für einen beliebigen Differenzdruck über dem Fluidtransportkreislauf (10).

8. Verfahren nach einem der Ansprüche 1 bis 7, wobei das Verfahren umfasst, dass der Schaltkreis (20) die Eigenschaften des eingerichteten Ventils für einen vollständigen Arbeitsbereich des betätigten Ventils (V) von einer minimalen Ventilstellung, insbesondere einer vollständig geschlossenen Ventilstellung, bis zu einer maximalen Ventilstellung, insbesondere einer vollständig geöffneten Ventilstellung, bestimmt (S3).

9. Verfahren nach einem der Ansprüche 1 bis 8, wobei das Verfahren umfasst, dass der Schaltkreis (20) die eingerichteten Ventileigenschaften durch iteratives Einstellen von Parametern einer mathematischen Näherungsfunktion, die die eingerichteten Ventileigenschaften definiert, unter Verwendung der Vielzahl von Durchflusswerten (m) für die jeweiligen Ventilstellungen bestimmt (S3).

10. Verfahren nach einem der Ansprüche 1 bis 9, wobei das Verfahren umfasst, dass der Schaltkreis (20) die Eigenschaften des eingerichteten Ventils bestimmt (S3), indem er eine mathematische Näherungsfunktion an mindestens eines der folgenden Elemente anpasst: die Vielzahl von Durchflusswerten (m) für die jeweiligen Ventilstellungen über einen vollständigen Arbeitsbereich des betätigten Ventils (V) oder über einen Teilbetriebsbereich des betätigten Ventils (V) um einen aktuellen Betriebspunkt herum.

11. Verfahren nach einem der Ansprüche 1 bis 10, wobei das Verfahren ferner umfasst, dass der Schaltkreis (20) einen geschätzten aktuellen Differenzdruck über den Fluidtransportkreislauf (10) unter Verwendung der eingerichteten Ventileigenschaften und zeitlichen Änderungen des Fluiddurchflusses (Φ) im Fluidtransportkreislauf (10) bestimmt und ein Ausgangssignal erzeugt, das den geschätzten aktuellen Differenzdruck angibt.

12. Verfahren nach einem der Ansprüche 1 bis 11, wobei das Verfahren umfasst, dass der Schaltkreis (20) einen ersten Satz der mehreren Durchflusswerte (m) und der entsprechenden Ventilstellungen des betätigten Ventils (V) speichert (S2), die gemessen werden, wenn die entsprechenden Ventilstellungen vom betätigten Ventil (V) in einem Prozess der Verringerung des Fluiddurchflusses (Φ) in der Fluidtransportkreislauf (10) erreicht werden; Speichern (S2) eines zweiten Satzes der mehreren Durchflusswerte (m) und der entsprechenden Ventilstellungen des betätigten Ventils (V), gemessen, wenn die entsprechenden Ventilstellungen vom betätigten Ventil (V) in einem Prozess der Erhöhung des Fluiddurchflusses (Φ) in der Fluidtransportkreislauf (10) erreicht werden; Bestimmen (S3) während des Betriebs (O) des Durchflussregelungssystem (3) mindestens eines von: den ersten eingerichteten Ventileigenschaften unter Verwendung des ersten Satzes der mehreren Durchflusswerte (m), den zweiten eingerichteten Ventileigenschaften unter Verwendung des zweiten Satzes der mehreren Durchflusswerte (m) oder den mittleren eingerichteten Ventileigenschaften unter Verwendung des ersten Satzes der mehreren Durchflusswerte (m) und des zweiten Satzes der mehreren Durchflusswerte (m); und Regeln (S4) des betätigten Ventils (V), um den Fluiddurchfluss (Φ) im Fluidtransportkreislauf (10) unter Verwendung mindestens einer der folgenden Eigenschaften anzupassen: der ersten eingerichteten Ventileigenschaften, der zweiten eingerichteten Ventileigenschaften oder der mittleren eingerichteten Ventileigenschaften.

13. Verfahren nach einem der Ansprüche 1 bis 12, wobei das Verfahren ferner umfasst, dass der Schaltkreis (20) einen Temperaturwert (t) empfängt und den Temperaturwert (t) zur Verwendung für das Bestimmen eines Durchflusssollwerts (r) für das Durchflusssteuersystem (3) verwendet, das über den Fluidtransportkreislauf (10) den Fluiddurchfluss (Φ) zu einem Wärmetauscher (X) bereitstellt.

14. Verfahren nach einem der Ansprüche 1 bis 13, wobei das Verfahren umfasst, dass der Schaltkreis (20) die Eigenschaften des eingerichteten Ventils unter Verwendung der inhärenten Eigenschaften des betätigten Ventils (V) bestimmt (S3).

15. Regelvorrichtung (2) zur Regelung eines Durchflussregelungssystem (3) in einer HVAC-Anlage (1), wobei das Durchflussregelungssystem (3) ein betätigtes Ventil (V) zum Einstellen eines Fluiddurchflusses (Φ) in einem Fluidtransportkreislauf (10) der HVAC-Anlage (1) umfasst, wobei die Regelvorrichtung (2) einen Schaltkreis (20) umfasst, der dazu ausgelegt ist, das Verfahren nach einem der Ansprüche 1 bis 14 auszuführen.

16. Durchflussregelungssystem (3) für eine HVAC-Anlage (1), wobei das Durchflussregelungssystem (3) ein betätigtes Ventil (V) umfasst, das dazu ausgelegt ist, einen Fluiddurchfluss (Φ) in einem Fluidtransportkreislauf (10) der HVAC-Anlage (1) einzustellen, einen Durchflusssensor (S), der dazu konfiguriert ist, einen Fluiddurchfluss (Φ) in dem Fluidtransportkreislauf (10) zu messen, und einen Schaltkreis (20), der dazu konfiguriert ist, die folgenden Schritte auszuführen:

Empfangen (S1) und Speichern (S2) während des Betriebs (O) des Durchflussregelungssystems (3) in der HVAC-Anlage (1) einer Vielzahl von Durchflusswerten (m), die in dem Fluidtransportkreislauf (10) durch den Durchflusssensor (S) für jeweilige Ventilstellungen des betätigten Ventils (V) gemessen werden;

Bestimmen (S3) während des Betriebs (O) des Durchflussregelungssystems (3) in der HVAC-Anlage (1) der Eigenschaften des in der HVAC-Anlage (1) eingerichteten betätigten Ventils (V) unter Verwendung der mehreren Durchflusswerte (m) für die jeweiligen Ventilstellungen; und

Regeln (S4) des betätigten Ventils (V) zum Einstellen des Fluiddurchfluss (Φ) im Fluidtransportkreislauf (10) unter Verwendung der eingerichteten Ventileigenschaften.

17. Das Durchflussregelungssystems (3) nach Anspruch 16, wobei der Schaltkreis (20) ferner dazu ausgelegt ist, das Verfahren nach einem der Ansprüche 2 bis 14 auszuführen.

18. Computerprogrammprodukt, das ein nichtflüchtiges, computerlesbares Medium umfasst, auf dem ein Computerprogrammcode gespeichert ist, der so konfiguriert ist, dass er einen Prozessor (20) eines Durchflussregelungssystems (3) in einer HVAC-Anlage (1) steuert, wobei das Durchflussregelungssystem (3) ein betätigtes Ventil (V) zum Einstellen eines Fluiddurchflusses (Φ) in einem Fluidtransportkreislauf (10) der HVAC-Anlage (1) umfasst, sodass der Prozessor (20) das Verfahren nach einem der Ansprüche 1 bis 14 ausführt.

## Revendications

1. Procédé de commande d'un système de contrôle de débit (3) dans une installation HVAC (1), lequel système de contrôle de débit (3) comprend une vanne actionnée (V) pour régler un débit de fluide (Φ) dans un circuit de transport de fluide (10) de l'installation HVAC (1), le procédé comprenant un circuit électronique (20) exécutant les étapes suivantes :

recevoir (S1) et stocker (S2), pendant l'opération (O) du système de contrôle de débit (3), une pluralité de valeurs de débit (m) mesurées dans le circuit de transport de fluide (10) par un capteur de débit (S) pour les positions respectives de la vanne actionnée (V) ;

déterminer (S3), pendant l'opération (O) du système de contrôle de débit (3), les caractéristiques de la vanne actionnée (V) telle qu'installée dans l'installation HVAC (1), en utilisant la pluralité de valeurs de débit (m) pour les positions respectives de la vanne ; et

commander (S4) la vanne actionnée (V) pour ajuster le débit de fluide (Φ) dans le circuit de transport de fluide (10), en utilisant les caractéristiques de la vanne installée.

2. Procédé selon la revendication 1, dans lequel le procédé comprend en outre le circuit électronique (20) recevant (S40) une valeur de point de consigne de débit (r), déterminer (S41) une valeur de commande anticipée (w) à partir de la valeur de point de consigne de débit (r) et des caractéristiques de la vanne installée, et utiliser la valeur de commande anticipée (w) pour commander (S4) la vanne actionnée (V) afin d'ajuster le débit de fluide (Φ) dans le circuit de transport de fluide (10).

3. Procédé selon la revendication 2, dans lequel le procédé comprend en outre le circuit électronique (20) déterminant (S42) une valeur de commande de rétroaction (b) à partir de la valeur de point de consigne de débit (r) et d'une valeur de débit actuel (m) mesurée dans le circuit de transport de fluide (10) par le capteur de débit (S), et en utilisant en outre la valeur de commande de rétroaction (b) pour commander (S4) la vanne actionnée (V) afin d'ajuster le débit de fluide (Φ) dans le circuit de transport de fluide (10).

4. Procédé selon l'une des revendications 1 ou 2, dans lequel le procédé comprend en outre le circuit électronique (20) déterminant (S42) une valeur de commande de rétroaction (b) à partir d'une valeur de point de consigne de débit (r), en utilisant une valeur de débit actuel (m) mesurée dans le circuit de transport de fluide (10) par le capteur de débit (S) et les caractéristiques de la vanne installée, et en utilisant la valeur de commande de rétroaction (b) pour commander (S4) la vanne actionnée (V) afin de régler le débit de fluide (Φ) dans le circuit de transport de fluide (10).

5. Procédé selon l'une des revendications 3 ou 4, dans lequel le procédé comprend en outre le circuit électronique (20) ajustant des paramètres de commande pour déterminer (S42) la valeur de commande de rétroaction (b) avec une réactivité réduite dans une plage de fonctionnement inférieure de la vanne actionnée (V).

6. Procédé selon l'une des revendications 3 à 5, dans lequel le procédé comprend en outre le circuit électronique (20) ajustant les paramètres de commande pour déterminer (S42) la valeur de commande de rétroaction (b) en fonction d'un taux de variation de la valeur de consigne du point de consigne de débit.

7. Procédé selon l'une des revendications 1 à 6, dans lequel le procédé comprend le circuit électronique (20) déterminant (S3) les caractéristiques de la vanne installée pour indiquer, pour toute position particulière de la vanne, dans une plage de fonctionnement de la vanne actionnée (V), le débit de fluide (Φ) à cette position particulière de la vanne actionnée (V) pour au moins l'un des éléments suivants : à une pression différentielle particulière sur le circuit de transport de fluide (10) ou normalisé pour toute pression différentielle sur le circuit de transport de fluide (10).

8. Procédé selon l'une des revendications 1 à 7, dans lequel le procédé comprend le circuit électronique (20) déterminant (S3) les caractéristiques de la vanne installée pour une plage de fonctionnement complète de la vanne actionnée (V), depuis une position minimale de la vanne, en particulier une position de vanne complètement fermée, jusqu'à une position maximale de la vanne, en particulier une position de vanne complètement ouverte.

9. Procédé selon l'une des revendications 1 à 8, dans lequel le procédé comprend le circuit électronique (20) déterminant (S3) les caractéristiques de la vanne installée en ajustant de manière itérative les paramètres d'une fonction d'approximation mathématique qui définit les caractéristiques de la vanne installée, en utilisant la pluralité de valeurs de débit (m) pour les positions respectives de la vanne.

10. Procédé selon l'une des revendications 1 à 9, dans lequel le procédé comprend le circuit électronique (20) déterminant (S3) les caractéristiques de la vanne installée en ajustant une fonction d'approximation mathématique à au moins l'un des éléments suivants : la pluralité de valeurs de débit (m) pour les positions respectives de la vanne sur une plage de fonctionnement complète de la vanne actionnée (V) ou sur une plage de fonctionnement partielle de la vanne actionnée (V) autour d'un point de fonctionnement actuel.

11. Procédé selon l'une des revendications 1 à 10, dans lequel le procédé comprend en outre le circuit électronique (20) déterminant une pression différentielle actuelle estimée sur le circuit de transport de fluide (10), en utilisant les caractéristiques de la vanne installée et les variations temporelles du débit de fluide (Φ) dans le circuit de transport de fluide (10) ; et générant un signal de sortie indicatif de la pression différentielle actuelle estimée.

12. Procédé selon l'une des revendications 1 à 11, dans lequel le procédé comprend le circuit électronique (20) stockant (S2) un premier ensemble de la pluralité de valeurs de débit (m) et de positions de vanne respectives de la vanne actionnée (V), mesurées lorsque les positions de vanne respectives sont atteintes par la vanne actionnée (V) dans un processus de réduction du débit de fluide (Φ) dans le circuit de transport de fluide (10) ; stocker (S2) un deuxième ensemble de la pluralité de valeurs de débit (m) et de positions respectives de la vanne actionnée (V), mesurées lorsque les positions respectives de la vanne sont atteintes par la vanne actionnée (V) dans un processus d'augmentation du débit de fluide (Φ) dans le circuit de transport de fluide (10) ; déterminer (S3), pendant l'opération (O) du système de contrôle de débit (3), au moins l'une des caractéristiques suivantes : les premières caractéristiques de vanne installées, en utilisant le premier ensemble de la pluralité de valeurs de débit (m), les deuxièmes caractéristiques de vanne installées, en utilisant le deuxième ensemble de la pluralité de valeurs de débit (m), ou les caractéristiques de vanne installées intermédiaires, en utilisant le premier ensemble de la pluralité de valeurs de débit (m) et le deuxième ensemble de la pluralité de valeurs de débit (m) ; et commander (S4) la vanne actionnée (V) pour ajuster le débit de fluide (Φ) dans le circuit de transport de fluide (10), en utilisant au moins l'une des caractéristiques de vanne installées suivantes : les premières caractéristiques de vanne installées, les deuxièmes caractéristiques de vanne installées ou les caractéristiques de vanne installées intermédiaires.

13. Procédé selon l'une des revendications 1 à 12, dans lequel le procédé comprend en outre le circuit électronique (20) recevant une valeur de température (t) et utilisant la valeur de température (t) pour déterminer une valeur de point de consigne de débit (r) pour le système de commande de débit (3) fournissant, à travers le circuit de transport de fluide (10), le débit de fluide (Φ) à un échangeur d'énergie thermique (X).

14. Procédé selon l'une des revendications 1 à 13, dans lequel le procédé comprend le circuit électronique (20) déterminant (S3) les caractéristiques de la vanne installée en utilisant les caractéristiques inhérentes à la vanne actionnée (V).

15. Dispositif de régulation de débit (2) destiné à commander un système de régulation de débit (3) dans une installation HVAC (1), lequel système de régulation de débit (3) comprend une vanne actionnée (V) pour régler un débit de fluide ($\Phi$) dans un circuit de transport de fluide (10) de l'installation HVAC (1), le dispositif de commande (2) comprenant un circuit électronique (20) configuré pour exécuter le procédé selon l'une des revendications 1 à 14.

16. Système de régulation de débit (3) pour une installation HVAC (1), le système de contrôle de débit (3) comprenant une vanne actionnée (V) configurée pour régler un débit de fluide ($\Phi$) dans un circuit de transport de fluide (10) de l'installation HVAC (1), un capteur de débit (S) configuré pour mesurer un débit de fluide ($\Phi$) dans le circuit de transport de fluide (10), et un circuit électronique (20) configuré pour exécuter les étapes suivantes :

recevoir (S1) et stocker (S2), pendant l'opération (O) du système de contrôle de débit (3) dans l'installation HVAC (1), une pluralité de valeurs de débit (m) mesurées dans le circuit de transport de fluide (10) par le capteur de débit (S) pour des positions respectives de la vanne actionnée (V) ;
déterminer (S3), pendant l'opération (O) du système de contrôle de débit (3) dans l'installation HVAC (1), les caractéristiques de la vanne actionnée (V) telle qu'installée dans l'installation HVAC (1), en utilisant la pluralité de valeurs de débit (m) pour les positions respectives de la vanne ; et
commander (S4) la vanne actionnée (V) pour ajuster le débit de fluide ($\Phi$) dans le circuit de transport de fluide (10), en utilisant les caractéristiques de la vanne installée.

17. Système de contrôle de débit (3) selon la revendication 16, dans lequel le circuit électronique (20) est en outre configuré pour exécuter le procédé selon l'une des revendications 2 à 14.

18. Produit programme d'ordinateur comprenant un support non transitoire lisible par ordinateur sur lequel est stocké un code de programme informatique configuré pour commander un processeur (20) d'un système de contrôle de débit (3) dans une installation HVAC (1), lequel système de contrôle de débit (3) comprend une vanne actionnée (V) pour régler un débit de fluide ($\Phi$) dans un circuit de transport de fluide (10) de l'installation HVAC (1), de telle sorte que le processeur (20) exécute le procédé de l'une des revendications 1 à 14.

**Fig. 1**

**Fig. 1a**

**Fig. 2**

S4

CONTROL
ACTUATED VALVE USING
INSTALLED VALVE CHARACTERISTICS

S40

RECEIVE / DETERMINE
FLOW SETPOINT

S41

GENERATE
FEEDFORWARD
CONTROL VALUE

GENERATE
FEEDBACK
CONTROL VALUE

S42

S43

GENERATE / APPLY
CONTROL VALUE / CONTROL SIGNAL
FOR ACTUATED VALVE

S44

ACTUATE VALVE TO ADJUST
ORIFICE AND FLOW

C

CONTROL PROCESS

# Fig. 3

## Fig. 4

## Fig. 5

# Fig. 6

**EP 4 497 052 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012065275 A
- WO 2020114668 A
- US 5062446 A